# DEMANDE DE BREVET EUROPEEN

(11) **EP 2 457 766 A1**
(43) Date de publication de la demande: **30.05.2012**
(21) Numéro de dépôt: 11189662.7
(22) Date de dépôt: 18.11.2011
(51) Int. Cl.: B60N 2/58, B60N 2/60

(54) **Dispositif de fixation de coiffe d'habillage et d'empiècement de masquage, pour un siège de véhicule**

(30) Priorité: 25.11.2010 FR 1059720
(71) Demandeur: PEUGEOT CITROËN AUTOMOBILES SA, 78140 Velizy-Villacoublay (FR)
(72) Inventeur: David, Eric, 92290 CHATENAY MALABRY (FR)

(57) **Abrégé**

Un dispositif de fixation (D1) est destiné à équiper un siège (SI) de véhicule comprenant une assise (AS) et un dossier qui se rejoignent au niveau d'une zone de jonction et qui sont propres à être habillés d'une coiffe d'habillage (CH). Ce dispositif (D1) comprend une embase (EB) propre à être installée dans une gorge (G2) définie au voisinage de la zone de jonction sur l'assise (AS) ou le dossier et munie, d'une part, d'un premier moyen de fixation (CL1) propre à maintenir localement une partie (T2) de la coiffe d'habillage (CH), et, d'autre part, d'un second moyen de fixation (CL2) situé à côté du premier moyen de fixation (CL1) et propre à maintenir localement une partie (T5) d'un empiècement (EP) destiné à masquer la zone de jonction sous la coiffe d'habillage (CH).

## Description

L'invention concerne les sièges de véhicule, éventuellement de type automobile, qui sont chargés de supporter une ou plusieurs personnes en position assise.

On entend ici par "siège" un équipement comprenant une assise, destinée à être montée directement ou indirectement (via des piètements) sur un plancher de véhicule, et un dossier, éventuellement monté à rotation (éventuellement sur l'assise).

Le dossier et l'assise de certains sièges de véhicule comprennent une partie d'accueil réalisée par moulage dans une mousse synthétique et que l'on habille avec une unique coiffe d'habillage en tissu ou en cuir, qui constitue une espèce de housse. Afin que la coiffe d'habillage puisse être maintenue dans une position fixe sur les parties d'accueil du dossier et de l'assise, on peut, par exemple, définir dans ces dernières des gorges (ou rainures) transversales où sont logées un ou plusieurs (généralement deux) dispositifs de fixation auxquels sont solidarisées des parties de la coiffe d'habillage.

Généralement, le dossier ne comporte qu'une seule gorge située dans une moitié supérieure d'une face avant (ou d'accueil), et l'assise comporte une première gorge située dans une partie arrière d'une face supérieure (ou d'accueil) au niveau d'une zone de jonction où elle rejoint la partie d'extrémité inférieure du dossier, et une seconde gorge située dans une moitié avant de cette même face supérieure, opposée à sa partie arrière. Chaque dispositif de fixation est par exemple surmoulé à l'intérieur d'une gorge et comprend un moyen de clippage qui est propre à immobiliser localement une tringle (ou tige) qui a été solidarisée (par exemple par couture ou collage) en un endroit prédéfini de la coiffe d'habillage.

Ce mode de solidarisation permet d'immobiliser efficacement la coiffe d'habillage sur les parties d'accueil du siège. Cependant, il génère au niveau de la zone de jonction un repli relativement important qui s'avère relativement inesthétique et fait croire qu'il existe une séparation entre l'assise et le dossier alors même que l'utilisation d'une unique coiffe d'habillage a notamment pour objectif de donner une impression de continuité entre cette assise et ce dossier (comme c'est par exemple le cas avec un siège baquet). En outre, cette séparation réelle peut s'avérer inconfortable lorsqu'un passager est calé étroitement contre le dossier, dans la partie arrière de l'assise.

L'invention a donc pour but d'améliorer la situation.

L'invention propose notamment à cet effet un dispositif de fixation destiné à équiper un siège de véhicule comprenant une assise et un dossier qui se rejoignent au niveau d'une zone de jonction et qui sont propres à être habillés d'une coiffe d'habillage. Ce dispositif de fixation se caractérise par le fait qu'il comprend une embase propre à être installée dans une gorge définie au voisinage de la zone de jonction sur l'assise ou le dossier et munie, d'une part, d'un premier moyen de fixation propre à maintenir localement une partie de la coiffe d'habillage, et, d'autre part, d'un second moyen de fixation situé à côté du premier moyen de fixation et propre à maintenir localement une partie d'un empiècement qui est destiné à masquer la zone de jonction sous la coiffe d'habillage.

Le dispositif de fixation selon l'invention peut comporter d'autres caractéristiques qui peuvent être prises séparément ou en combinaison, et notamment :
- ses premier et second moyens de fixation peuvent être situés à des hauteurs différentes par rapport à son embase;
   ➢ son premier moyen de fixation peut être situé à une hauteur par rapport à son embase qui est supérieure à celle de son second moyen de fixation;
- ses premier et second moyens de fixation peuvent être soit alignés l'un derrière l'autre sur son embase, soit décalés latéralement l'un par rapport à l'autre sur son embase;
- son premier moyen de fixation peut être agencé sous la forme d'un premier moyen de clippage propre à immobiliser localement une partie de la coiffe d'habillage;
   ➢ le premier moyen de clippage peut comprendre deux pattes flexibles et incurvées de manière à délimiter un logement propre à recevoir une partie de la coiffe d'habillage qui est agencée sous la forme d'une tringle;
   ● le premier moyen de fixation peut être entouré de deux ailettes de support destinées à supporter une partie de la tringle;
- son second moyen de fixation peut être agencé sous la forme d'un second moyen de clippage propre à immobiliser localement une partie de l'empiècement;
   ➢ le second moyen de clippage peut comprendre deux pattes flexibles et incurvées de manière à délimiter un logement propre à recevoir une partie de l'empiècement qui est agencée sous la forme d'une tringle;
   ● le second moyen de fixation peut être entouré de deux ailettes de support destinées à supporter une partie de la tringle.

L'invention propose également un siège de véhicule comprenant une assise, un dossier et au moins deux dispositifs de fixation du type de celui présenté ci-avant, solidarisés respectivement à l'assise et au dossier, et auxquels sont solidarisés un empiècement, destiné à masquer la zone de jonction entre l'assise et le dossier, et une coiffe d'habillage, destinée à habiller l'assise et le dossier.

L'invention propose également un véhicule, éventuellement de type automobile, et comprenant au moins un siège du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue en perspective du côté avant, un exemple de réalisation de siège de véhicule automobile et un exemple de réalisation de coiffe d'habillage destinée à habiller ce siège,
- la figure 2 illustre schématiquement, dans une vue en perspective, un exemple de réalisation de premier dispositif de support selon l'invention, avant qu'il ne soit implanté dans une gorge d'une assise de siège de véhicule automobile,
- la figure 3 illustre schématiquement, dans une vue en coupe transversale, le premier dispositif de support de la figure 2, une fois implanté dans une gorge d'une assise de siège de véhicule automobile, et après couplage à une partie d'un empiècement et à une partie d'une coiffe d'habillage, et
- la figure 4 illustre schématiquement, dans une vue en coupe transversale, un exemple de réalisation de second dispositif de support de type classique, implanté dans une gorge d'une assise de siège de véhicule automobile, et auquel est solidarisée une partie d'une coiffe d'habillage.

Les dessins annexés pourront non seulement servir à compléter l'invention, mais aussi contribuer à sa définition, le cas échéant.

L'invention a pour but d'offrir un premier dispositif de fixation (D1) destiné à équiper un siège (SI) de véhicule comprenant une assise (AS) et un dossier (DS), séparés l'un de l'autre mais qui se rejoignent au niveau d'une zone de jonction, et destinés à être habillés d'une coiffe d'habillage (CH).

On considère dans ce qui suit, à titre d'exemple non limitatif, que le véhicule est de type automobile, comme par exemple une voiture. Mais, l'invention n'est pas limitée à ce type de véhicule. Elle concerne en effet tout véhicule comportant au moins un plancher sur lequel peut être installé au moins un siège. Par conséquent, l'invention concerne les véhicules terrestres, maritimes (ou fluviaux) et aériens.

Par ailleurs, on considère dans ce qui suit, à titre d'exemple non limitatif, que le siège (SI) est de type monoplace. Mais, l'invention n'est pas limitée à ce type de siège. Elle concerne en effet tout type de siège pouvant accueillir, en position assise, au moins une personne. Par conséquent, il pourra également s'agir d'une banquette.

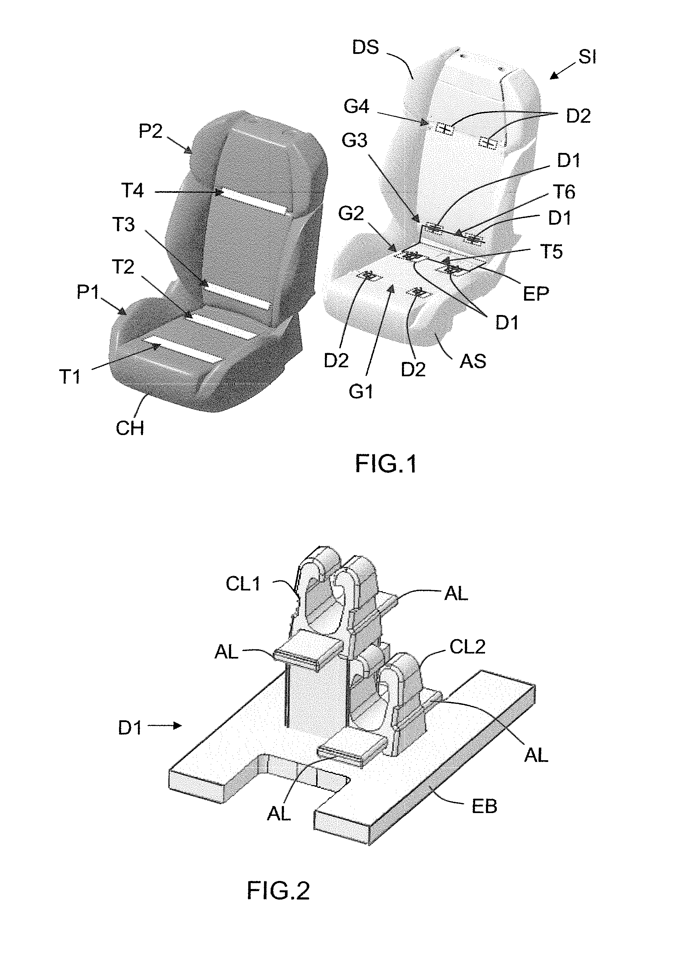

On a schématiquement illustré sur la figure 1 un exemple de réalisation de siège SI de véhicule, avant que son assise AS et son dossier DS ne soient habillés ensemble par deux parties complémentaires P1 et P2 d'une coiffe d'habillage CH en tissu ou en cuir.

On entend ici par "assise" un élément AS comportant une structure pourvue d'une partie d'accueil réalisée par moulage dans une mousse synthétique et destinée à être habillée par une première partie P1 prédéfinie d'une unique coiffe d'habillage CH. Par ailleurs, on entend ici par "dossier" un élément DS comportant une structure pourvue d'une partie d'accueil réalisée par moulage dans une mousse synthétique et destinée à être habillée par une seconde partie P2 prédéfinie de cette même coiffe d'habillage CH, complémentaire de sa première partie P1.

On notera que le dossier DS peut être éventuellement monté à rotation suivant une direction transversale (sensiblement perpendiculaire aux côtés latéraux comportant les portières latérales du véhicule). Par ailleurs, ce montage à rotation peut éventuellement se faire par rapport à un élément structurel d'une partie arrière de l'assise AS qui est située au niveau de la zone de jonction avec la partie inférieure du dossier DS.

Le dossier DS et l'assise AS comprennent une partie d'accueil réalisée par moulage dans une mousse synthétique et que l'on habille avec une unique coiffe d'habillage CH en tissu ou en cuir, qui constitue une espèce de housse.

Afin de permettre la solidarisation (dans une position fixe) de la coiffe d'habillage CH au dossier DS et à l'assise AS, chacun des ces derniers (DS et AS) comprend, comme illustré, au moins deux gorges (ou rainures) transversales Gi (ici i = 1 à 4).

Dans l'exemple non limitatif illustré sur la figure 1, d'une part, l'assise AS comprend des première G1 et deuxième G2 gorges transversales, situées respectivement dans une moitié avant de sa face supérieure (ou d'accueil) et dans une partie arrière de cette même face supérieure, au voisinage de la zone de jonction, et, d'autre part, le dossier DS comprend des troisième G3 et quatrième G4 gorges transversales, situées respectivement dans une partie inférieure d'une face avant (ou d'accueil), au voisinage de la zone de jonction, et dans une partie supérieure de cette même face avant, opposée à sa partie inférieure.

Les deuxième G2 et troisième G3 gorges transversales comprennent chacune au moins un premier dispositif de fixation D1 selon l'invention.

Dans l'exemple non limitatif illustré sur la figure 1, les deuxième G2 et troisième G3 gorges transversales comprennent chacune deux premiers dispositifs de fixation D1. Mais, elles pourraient n'en comporter qu'un seul en position centrale, ou bien plus de deux (par exemple trois ou quatre).

On notera que l'implantation d'un premier dispositif de fixation D1 dans une gorge Gi peut se faire par tout moyen connu de l'homme de l'art, et notamment par surmoulage.

On notera également que, contrairement à ce qui est illustré schématiquement sur la figure 1 pour faciliter la compréhension, les premier D1 et second D2 dispositifs de fixation sont implantés à l'intérieur des gorges Gi, et donc ne présentent pas de parties qui font saillie au-delà de la face d'accueil correspondante (pour une raison évident de confort).

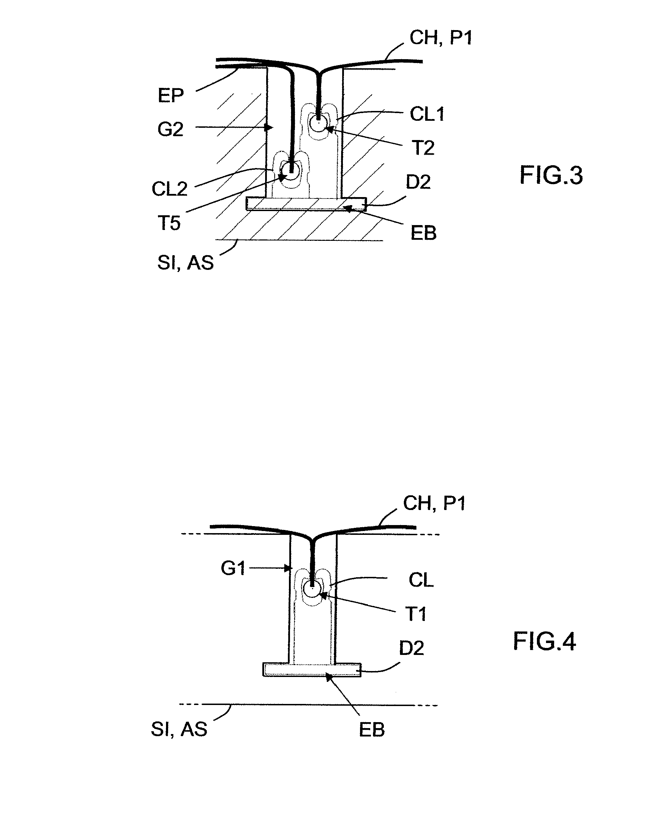

Comme illustré sur les figures 2 et 3, chaque premier dispositif de fixation D1, selon l'invention, comprend une embase EB propre à être installée dans une gorge transversale G2 ou G3 définie au voisinage de la zone de jonction sur l'assise AS ou le dossier DS et munie de premier CL1 et second CL2 moyens de fixation.

Le premier moyen de fixation CL1 est agencé de manière à maintenir localement une partie Tj de la coiffe d'habillage CH. Par exemple, ce premier moyen de fixation CL1 peut être agencé sous la forme d'un premier moyen de clippage destiné à immobiliser localement une partie Tj de la coiffe d'habillage CH. Comme illustré non limitativement sur les figures 2 et 3, ce premier moyen de clippage (ou clip) CL1 comprend, par exemple, deux pattes flexibles et incurvées de façons opposées afin de délimiter un logement propre à recevoir une partie Tj (j = 2 ou 3) de la coiffe d'habillage CH qui est agencée sous la forme d'une tringle (ou tige). Chaque tringle T2 ou T3 est solidarisée en un endroit prédéfini de la face interne de la coiffe d'habillage CH, dans une position transversale, de manière à être située sensiblement parallèlement à une gorge transversale G2 ou G3 correspondante. Par exemple, cette solidarisation peut se faire par couture ou collage.

Le second moyen de fixation CL2 est agencé de manière à maintenir localement une partie Tj' (j' = 5 ou 6) d'un empiècement EP qui est destiné à masquer la zone de jonction sous la coiffe d'habillage CH (voir figure 1).

On entend ici par "empiècement" une pièce de tissu ou de cuir, par exemple de forme générale rectangulaire, et destinée à être intercalée entre la coiffe d'habillage CH et les portions des faces d'accueil des dossier DS et assise AS au niveau de la zone de jonction (c'est-à-dire devant et autour de celle-ci, du côté accueil).

Par exemple, ce second moyen de fixation CL2 peut être agencé sous la forme d'un second moyen de clippage destiné à immobiliser localement une partie Tj' de l'empiècement EP. Comme illustré non limitativement sur les figures 2 et 3, ce second moyen de clippage (ou clip) CL2 comprend, par exemple, deux pattes flexibles et incurvées de façons opposées afin de délimiter un logement propre à recevoir une partie Tj' (j' = 5 ou 6) de l'empiètement EP qui est agencée sous la forme d'une tringle (ou tige). Chaque tringle T5 ou T6 est solidarisée en un endroit prédéfini de la face interne de l'empiètement EP, dans une position transversale, de manière à être située sensiblement parallèlement à une gorge transversale G2 ou G3 correspondante. Par exemple, cette solidarisation peut se faire par couture ou collage.

Comme illustré non limitativement sur les figures 2 et 3, il est avantageux que les premier CL1 et second CL2 moyens de fixation soient situés à des hauteurs différentes par rapport à l'embase EB. Cela facilite en effet le clippage des tiges T2 et T5 ou T3 et T6 dans les logements correspondants définis respectivement par les premier CL1 et second CL2 moyens de fixation. En outre cela favorise le placage de l'empiècement EP contre les faces d'accueil des dossier DS et assise AS.

Dans ce cas, il est préférable que le premier moyen de fixation CL1 soit situé à une hauteur par rapport à l'embase EB qui est supérieure à la hauteur du second moyen de fixation CL2 par rapport à cette même embase EB.

On notera que dans une variante, les premier CL1 et second CL2 moyens de fixation pourraient être placés sensiblement à une même hauteur par rapport à l'embase EB.

Par ailleurs, et comme illustré non limitativement sur les figures 2 et 3, les premier CL1 et second CL2 moyens de fixation peuvent être alignés l'un derrière l'autre sur l'embase EB par rapport à une direction longitudinale (perpendiculaire à la direction transversale). Cela permet de rendre plus compact le premier dispositif de fixation D1. En outre, cela permet de renforcer la solidité du premier dispositif de fixation D1 étant donné que les premier CL1 et second CL2 moyens de fixation peuvent partager un pied commun de plus grande dimension suivant la direction longitudinale. Mais, dans une variante, les premier CL1 et second CL2 moyens de fixation pourraient être décalés latéralement (ou transversalement) l'un par rapport à l'autre sur l'embase EB.

On notera, comme illustré non limitativement sur la figure 2, que, lorsque les coiffe d'habillage CH et empiècement EP sont pourvus de tiges Tj et Tj', il est avantageux que les pieds des premier CL1 et second CL2 moyens de fixation soient pourvus d'ailettes (ou protubérances) de support AS diamétralement opposées suivant la direction transversale et destinées à supporter une partie correspondante d'une tringle Tj ou Tj'. Mais, seul l'un des premier CL1 et second CL2 moyens de fixation pourrait être pourvu d'ailettes de support AS (en particulier celui qui culmine le plus haut (ici CL1)), ou bien les premier CL1 et second CL2 moyens de fixation pourrait être tous les deux dépourvus d'ailettes de support AS.

Grâce à un premier dispositif de fixation D1 une partie de la coiffe d'habillage CH et une partie de l'empiècement EP peuvent être localement maintenues fixement en un même endroit, sans que l'on puisse s'apercevoir de la présence de l'empiècement EP. La séparation entre le dossier DS et l'assise AS, au niveau de leur zone de jonction, devient ainsi invisible, ce qui permet de faire croire à l'existence d'une continuité entre le dossier DS et l'assise AS.

Comme illustré sur les figures 1 et 4, la solidarisation de la coiffe d'habillage CH aux dossier DS et assise AS, dans les régions éloignées de la zone de jonction, peut être réalisée au moyen, notamment, de seconds dispositifs de fixation D2 implantés dans d'autres gorges transversales Gi (ici G1 et G4).

On notera que l'implantation d'un second dispositif de fixation D2 dans une gorge transversale G1 ou G4 peut se faire par tout moyen connu de l'homme de l'art, et notamment par surmoulage.

Comme cela est mieux illustré sur la figure 4, ce qui différencie un premier D1 d'un second D2 dispositif de fixation c'est essentiellement le nombre de moyens de fixation. En effet, un second dispositif de fixation D2 n'a besoin d'être couplé qu'à la coiffe d'habillage CH. Par conséquent, il n'a besoin de comporter qu'un unique moyen de fixation CL solidaire d'une embase EB et similaire au premier moyen de fixation CL1 présenté ci-avant, en référence aux figures 2 et 3.

Ce moyen de fixation CL peut donc être agencé sous la forme d'un moyen de clippage destiné à immobiliser localement une partie Tj (j = 1 ou 4) de la coiffe d'habillage CH. Comme illustré non limitativement sur la figure 4, ce moyen de clippage (ou clip) CL comprend, par exemple, deux pattes flexibles et incurvées de façons opposées afin de délimiter un logement propre à recevoir une partie Tj (j = 1 ou 4) de la coiffe d'habillage CH qui est agencée sous la forme d'une tringle (ou tige). Chaque tringle T1 ou T4 est solidarisée en un endroit prédéfini de la face interne de la coiffe d'habillage CH, dans une position transversale, de manière à être située sensiblement parallèlement à une gorge transversale G1 ou G4 correspondante. Par exemple, cette solidarisation peut se faire par couture ou collage.

Par ailleurs, lorsque la coiffe d'habillage CH est pourvue de tiges T1 et T4, il est avantageux que le pied du moyen de fixation CL de chaque second dispositif de fixation D2 soit pourvu d'ailettes (ou protubérances) de support AS diamétralement opposées suivant la direction transversale et destinées à supporter une partie correspondante d'une tringle T1 ou T4. Mais, cela n'est pas obligatoire.

L'invention ne se limite pas aux modes de réalisation de dispositif de fixation, de siège de véhicule, et de véhicule décrits ci-avant, seulement à titre d'exemple, mais elle englobe toutes les variantes que pourra envisager l'homme de l'art dans le cadre des revendications ci-après.

## Revendications

1. Dispositif de fixation (D1) pour un siège (SI) de véhicule comprenant une assise (AS) et un dossier (DS) se rejoignant au niveau d'une zone de jonction et propres à être habillés d'une coiffe d'habillage (CH), **caractérisé en ce qu'**il comprend une embase (EB) propre à être installée dans une gorge (Gi) définie au voisinage de ladite zone de jonction sur ladite assise (AS) ou ledit dossier (DS) et munie i) d'un premier moyen de fixation (CL1) propre à maintenir localement une partie (Tj) de ladite coiffe d'habillage (CH), et ii) d'un second moyen de fixation (CL2) situé à côté dudit premier moyen de fixation (CL1) et propre à maintenir localement une partie (Tj') d'un empiècement (EP) destiné à masquer ladite zone de jonction sous ladite coiffe d'habillage (CH).

2. Dispositif selon la revendication 1, **caractérisé en ce que** lesdits premier (CL1) et second (CL2) moyens de fixation sont situés à des hauteurs différentes par rapport à ladite embase (EB).

3. Dispositif selon la revendication 2, **caractérisé en ce que** ledit premier moyen de fixation (CL1) est situé à une hauteur par rapport à ladite embase (EB) qui est supérieure à celle dudit second moyen de fixation (CL2).

4. Dispositif selon l'une des revendications 1 à 3, **caractérisé en ce que** lesdits premier (CL1) et second (CL2) moyens de fixation sont alignés l'un derrière l'autre sur ladite embase (EB).

5. Dispositif selon l'une des revendications 1 à 3, **caractérisé en ce que** lesdits premier (CL1) et second (CL2) moyens de fixation sont décalés latéralement l'un par rapport à l'autre sur ladite embase (EB).

6. Dispositif selon l'une des revendications 1 à 5, **caractérisé en ce que** ledit premier moyen de fixation (CL1) est agencé sous la forme d'un premier moyen de clippage propre à immobiliser localement une partie (Tj) de ladite coiffe d'habillage (CH).

7. Dispositif selon la revendication 6, **caractérisé en ce que** ledit premier moyen de clippage (CL1) comprend deux pattes flexibles et incurvées de manière à délimiter un logement propre à recevoir une partie (Tj) de ladite coiffe d'habillage (CH) agencée sous la forme d'une tringle.

8. Dispositif selon l'une des revendications 1 à 7, **caractérisé en ce que** ledit second moyen de fixation (CL2) est agencé sous la forme d'un second moyen de clippage propre à immobiliser localement une partie (Tj') dudit empiècement (EP).

9. Dispositif selon la revendication 8, **caractérisé en ce que** ledit second moyen de clippage (CL2) comprend deux pattes flexibles et incurvées de manière à délimiter un logement propre à recevoir une partie (Tj') dudit empiècement (EP) agencée sous la forme d'une tringle.

10. Dispositif selon l'une des revendications 7 et 9, **caractérisé en ce que** l'un au moins desdits premier (CL1) et second (CL2) moyens de fixation est entouré de deux ailettes de support (AS) destinées à supporter une partie de ladite tringle (Tj).

11. Siège (SI) propre à faire partie d'un véhicule et comprenant une assise (AS) et un dossier (DS), **caractérisé en ce qu'**il comprend en outre au moins deux dispositifs de fixation (D1) selon l'une des revendications 1 à 10, solidarisés respectivement à ladite assise (AS) et audit dossier (DS), et auxquels sont solidarisés un empiècement (EM), destiné à masquer une zone de jonction entre ladite assise (AS) et ledit dossier (DS), et une coiffe d'habillage (CH) destinée à habiller ladite assise (AS) et ledit dossier (DS).

12. Véhicule, **caractérisé en ce qu'**il comprend au moins un siège (SI) selon la revendication 11.

13. Véhicule selon la revendication 12, **caractérisé en ce qu'**il est de type automobile.
